# EUROPÄISCHE PATENTSCHRIFT

(11) **EP 2 782 919 B1**
(45) Veröffentlichungstag und Bekanntmachung des Hinweises auf die Patenterteilung: **15.04.2015**
(21) Anmeldenummer: 12783617.9
(22) Anmeldetag: 13.11.2012
(51) Int. Cl.: C07F 7/08, C07F 7/18

(54) **VERFAHREN ZUR HERSTELLUNG VON FESTSTOFFEN AUS ALKALISALZEN VON SILANOLEN**
METHOD FOR PRODUCING SOLIDS FROM ALKALI SALTS OF SILANOLS
PROCÉDÉ DE PRODUCTION DE MATIÈRES SOLIDES À PARTIR DE SELS ALCALINS DE SILANOLS

(30) Priorität: 22.11.2011 DE 102011086812
(43) Veröffentlichungstag der Anmeldung: 01.10.2014
(73) Patentinhaber: Wacker Chemie AG, 81737 München (DE)
(72) Erfinder: STEPP, Michael, A-5122 Überackern (AT); MUELLER, Michael, 83410 Laufen (DE); WADEWITZ, Holger, 01612 Glaubitz (DE)
(74) Vertreter: Fritz, Helmut
(86) Internationale Anmeldenummer: PCT/EP2012/072432
(87) Internationale Veröffentlichungsnummer: WO 2013/075969

(56) Entgegenhaltungen:
- EP-A2- 2 273 221
- WO-A1-02/28500
- DE-B- 1 176 137
- DE-C1- 4 336 600

## Beschreibung

Die Erfindung betrifft ein Verfahren zur Herstellung von Feststoffen von Silanolsalzen aus Alkoxysilanen, Alkalihydroxid und Wasser, bei dem Wasser und Alkohol an einem Festbett entfernt werden.

Alkaliorganosiliconate wie Kaliummethylsiliconat werden schon seit Jahrzehnten zur Hydrophobierung, insbesondere von mineralischen Baustoffen eingesetzt. Sie lassen sich aufgrund ihrer guten Wasserlöslichkeit als wässrige Lösung auf Feststoffen applizieren, wo sie nach Verdampfen des Wassers unter dem Einfluss von Kohlendioxid festhaftende, dauerhaft wasserabweisende Oberflächen bilden. Da sie praktisch keine hydrolytisch abspaltbaren organischen Reste enthalten, erfolgt die Aushärtung vorteilhafterweise ohne Freisetzung unerwünschter flüchtiger, organischer Nebenprodukte.

Die Herstellung von Alkaliorganosiliconaten insbesondere Kalium- bzw. Natriummethylsiliconaten wurde vielfach beschrieben. In den meisten Fällen steht dabei die Herstellung von anwendungsfertigen und lagerstabilen, wässrigen Lösungen im Vordergrund. Beispielsweise wird in DE 4336600 ein kontinuierliches Verfahren ausgehend von Organotrichlorsilanen über das Zwischenprodukt Organotrialkoxysilan beansprucht. Vorteilhaft ist dabei, dass die gebildeten Nebenprodukte Chlorwasserstoff und Alkohol zurückgewonnen werden und die gebildete Siliconat-Lösung praktisch chlorfrei ist.

Anwendungsfertige Baustoffmischungen wie Zement- oder Gipsputze und -Spachtelmassen oder Fliesenkleber werden hauptsächlich als Pulver in Säcken oder Silos auf die Baustelle geliefert und erst dort mit dem Anmachwasser angerührt. Dafür wird ein festes Hydrophobiermittel benötigt, das der anwendungsfertigen Trockenmischung zugefügt werden kann und erst bei Zusatz von Wasser während der Applikation vor Ort, z.B. auf der Baustelle, in kurzer Zeit seine hydrophobierende Wirkung entfaltet. Dies nennt man Dry-Mix-Anwendung. Organosiliconate in fester Form haben sich als sehr effiziente Hydrophobieradditive dafür bewährt. Ihr Einsatz ist beispielsweise in folgenden Schriften beschrieben:
Die Anmeldung PCT/EP2011/061766 beansprucht feste Organosiliconate mit verringertem Alkaligehalt. Ihre Herstellung erfolgt durch Hydrolyse von Alkoxy- oder Halogensilanen mit wässriger Alkalilauge und azeotrope Trocknung der erhaltenen gegebenenfalls alkoholisch-wässrigen Siliconat-Lösung mit Hilfe eines inerten Lösungsmittels als Schlepper.

US 2567110 beschreibt den Zugang zu neutralen (Poly)siloxanen ausgehend von Alkalisil(ox)anolaten und Chlorsilanen. In Beispiel 1 ist die Herstellung von Natriummethylsiliconat durch Umsetzung eines Monomethylsiloxan-Hydrolysats mit einem molaren Äquivalent Natronlauge in Gegenwart von Ethanol beschrieben. Der Feststoff wird durch Abdestillieren des Lösungsmittels isoliert und anschließend bei 170°C bis zur Gewichtskonstanz getrocknet. Im technischen Maßstab ist ein solches Verfahren zur Feststoffisolierung nicht umsetzbar, da sich beim Eindampfen festhaftende Krusten an den Wänden des Reaktionsgefäßes bilden.

Ein weiterer Nachteil der bisher beschriebenen Eindampfprozesse bei der Isolierung des Feststoffs ist die Tatsache, dass sich Alkalisiliconate thermisch zersetzen, was ein Reaktionssicherheitsproblem darstellt. Beispielsweise zerfällt Kaliummethylsiliconat (K : Si = 1 : 1) oberhalb 120°C in einer stark exothermen Reaktion von 643 J/g unter Verlust der Methylgruppe. Unter adiabatischen Verhältnissen steigt dabei die Temperatur auf über 300°C an. Demnach ist auch davon auszugehen, dass bei dem in DE 1176137 beanspruchten Trocknungsverfahren einer wässrigen Siliconat-Lösung bei 350-400°C auf einer sich drehenden Heizplatte thermische Zersetzung stattfindet. Unabhängig davon erfordern diese hohen Temperaturen spezielle, teure Werkstoffe und aufwendige Sicherheitsmaßnahmen insbesondere wenn entzündliche Lösungsmittel anwesend sind. Außerdem wird ausgehend von überwiegend oder rein wässrigen Lösungen der Alkalisiliconate sehr viel Energie für das Verdampfen des Lösungsmittels Wasser benötigt, was die Wirtschaftlichkeit des Prozesses beeinträchtigt oder apparativ für eine technische Umsetzung zu aufwendig ist.

In US 2438055 ist die Herstellung von Siliconaten als Hydrate in fester Form beschrieben. Darin wird das Hydrolysat eines Monoorganotrialkoxysilans oder eines Monoorganotrichlorsilans mit 1 - 3 Mol-Äquivalenten Alkalihydroxid in Gegenwart von Alkohol umgesetzt. Die als Hydrate anfallenden Siliconate werden durch Abdampfen des Alkohols oder durch Zusatz entsprechender unpolarer Lösungsmittel auskristallisiert. In Beispiel 1 ist die Herstellung von festen Natriummethylsiliconat-Hydraten beschrieben: dazu wird 1 Mol-Äquivalent Methyltriethoxysilan mit 1 Mol-Äquivalent Natriumhydroxid in Form gesättigter Natronlauge (d.h. 50 Gew.-%) zur Reaktion gebracht. Zur Kristallisation des Siliconats wird der Lösung Methanol zugesetzt. Offenbar fällt dabei nur ein Teil des Siliconats aus. Durch Eindampfen der Mutterlauge wird nämlich ein weiterer Feststoff isoliert, der bei Trocknung über P₂O₅ bei 140°C 21% Gewichtsverlust zeigt. Über die Mengenverhältnisse wird keine Aussage getroffen.

In US 2803561 wird Alkyltrichlorsilan hydrolysiert zur entsprechenden Alkylkieselsäure, diese wird anschließend mit Alkalihydroxid umgesetzt zu einer wässrigen Lösung von Alkali-Siliconat, welche durch Zusatz von bis 10% Alkohol oder Keton stabilisiert wird. Wie die Trocknung des Siliconats erfolgt, ist nicht beschrieben. Die Anwendung des getrockneten Siliconats zur Hydrophobierung von Gips ist genannt.

Gegenstand der Erfindung ist ein Verfahren zur Herstellung von Feststoffen (F) aus Salzen von Silanolen, von deren Hydrolyse/Kondensationsprodukten, oder von Silanolen zusammen mit deren Hydrolyse/Kondensationsprodukten und Kationen, die ausgewählt werden aus Alkaliionen, bei denen das Molverhältnis von Kation zu Silicium 0,1 bis 3 beträgt, bei dem in einem ersten Schritt Alkoxysilane, deren Hydrolyse/Kondensationsprodukte, oder Alkoxysilane zusammen mit deren Hydrolyse/Kondensationsprodukten, wobei die Alkoxygruppe ausgewählt wird aus Methoxy-, Ethoxy-, 1-Propoxy- und 2-Propoxygruppe, mit Alkalihydroxid und Wasser hydrolysiert werden,
und in einem zweiten Schritt aus dem im ersten Schritt hergestellten Hydrolysat das im Hydrolysat vorhandene Wasser und der vorhandene Alkohol an einem Festbett verdampft werden und Feststoffe (F) erhalten werden.

Das Verfahren unterscheidet sich vom Stand der Technik durch die Verwendung eines Festbettes zur Trocknung. Die dadurch erzielte Oberflächenvergrößerung ermöglicht ein rasches Verdampfen der flüchtigen Bestandteile, insbesondere Alkohol und Wasser, sodass Anhaftungen an der Apparatewand und Agglomerationseffekte weitgehend vermieden werden.

Das Festbett besteht vorzugsweise aus einem pulverförmigen oder granulierten Material, das die spätere Anwendung nicht oder nicht wesentlich beeinträchtigt. Da der erfindungsgemäß hergestellte Feststoff (F) vorzugsweise zur Hydrophobierung von Baustoffen dient, werden als Festbett vorzugsweise pulverförmige oder granulierte Baustoffe, anwendungsfertige Baustoffmischungen, typische Zuschlagstoffe für anwendungsfertige Baustoffmischungen, unter den Herstellungs- und Lagerbedingungen inerte Feststoffe oder bereits getrocknetes Siliconat, insbesondere Feststoff (F) verwendet, wobei sich die Zusammensetzung des vorgelegten Siliconats von dem zu trocknenden Siliconat, dessen Lösung in Schritt 1 des erfindungsgmäßen Verfahrens hergestellt wurde, unterscheiden kann. Es können auch Mischungen verschiedener Feststoffe als Festbett eingesetzt werden.

Beispiele für Festbettmaterialien sind: Kaliummethylsiliconat, Natriummethylsiliconat, Natriumsilikat (Wasserglas), Kaliumsilikat, Calciumhydroxid, Calciumoxid, Calciumsilikat, Calciumaluminiumsilikat, Calciumphosphat, Gips (Calciumsulfat-Dihydrat), wie Alabastergips, α-Halbhydrat, β-Halbhydrat, Anhydrit I, Anhydrit IIᵤ, Anhydrit IIₛ, Anhydrit III, Analin, anwendungsfertiger Gipsputz, anwendungsfertige Gipsspachtelmasse, z.B. Fugenfüller, Portland-Zement, Trass-Zement, Weißzement, Eisenpulver, Eisenoxid, Aluminiumpulver, Aluminiumoxid, Quarzsand, Glaskugeln, Glaspulver, Tonerde, Granitsand, Basaltpulver, Porphyrgranulat, Kaliumhydroxid, Natriumhydroxid, Lithiumhydroxid, Kaliumcarbonat, Natriumcarbonat, Natriumhydrogencarbonat, Natriumsulfat, Calciumcarbonat, Kreide, Dolomitpulver, Magnesiumcarbonat, Magnesiumoxid, Talkum, Glimmerpulver, Kochsalz, Kaliumchlorid, Kaliumsulfat, hochdisperse Kieselsäure, gefällte Kieselsäure, Siliciumdioxid, Methylkieselsäure, Bentonit, Kieselgel, Polyvinylacetat, Polyvinylacetat - teilverseift, Polyvinylacetat-Copolymere mit Ethylen und/oder Vinylchlorid und/oder Buten und/oder Vinyllaurat und/oder Methyl(meth)acrylat, Polyvinylalkohol, Methylcellulose, Cellulose, Stärke, Saccharose, Glucose, Trikaliumcitrat, Kaliumtartrat und Feststoff (F).
Die Wahl des zu Beginn der Trocknung vorgelegten primären Festbett-Materials richtet sich nach dem Einsatzgebiet des Endprodukts, weil dieses dann ja zumindest den anfangs vorgelegten Festbettanteil enthält. Beispielsweise werden für Anwendungen zur Hydrophobierung von Gips enthaltenden Baustoffen vorzugsweise Gips, anwendungsfertige Gipsmischungen oder inerte Materialien wie Quarze, Silikate oder Kreide als primäres Festbettmaterial eingesetzt.
Wird als Festbett nicht das bereits zum Siliconat-Feststoff getrocknete Hydrolysat aus Schritt 1, insbesondere Feststoff (F), beispielsweise aus einer früheren Produktionkampagne verwendet, sondern ein Siliconat-Feststoff anderer Zusammensetzung oder ein anderer Feststoff, so entscheidet das Massenverhältnis von primär eingesetztem Festbett zu dem zu trocknenden Siliconat über die Wirksamkeit des Endprodukts. Um eine möglichst hohe hydrophobierende Wirksamkeit zu erzielen, ist deshalb ein möglichst hoher Anteil an getrocknetem Siliconat aus Schritt 1, insbesondere Feststoff (F) als Festbettmaterial einzusetzen. Der Anteil an getrocknetem Hydrolysat aus Schritt 1 im getrockneten Feststoff (F) liegt vorzugsweise bei mindestens 60%, besonders bevorzugt bei mindestens 80%, insbesondere bei mindestens 95% bezogen auf die Masse des Feststoffs (F).

Die Korngrößen des eingesetzten Festbetts liegen vorzugsweise bei höchstens 2 cm, besonders bevorzugt höchstens 1 mm, insbesondere höchstens 0,5 mm, vorzugsweise bei mindestens 0,1 µm, besonders bevorzugt mindestens 1 µm, insbesondere mindestens 10 µm.

Dabei werden die bei der Hydrolysereaktion von Alkoxysilanen mit Alkalilaugen erhaltenen wässrig alkoholischen Lösungen von Organosiliconaten, deren Herstellung beispielweise in PCT/EP2011/061766 und DE 4336600 beschrieben ist, im zweiten Schritt mit dem Festbett unter Bedingungen in Kontakt gebracht, bei denen eine möglichst rasche Verdampfung der flüchtigen Bestandteile erfolgt. Überraschenderweise kann bei diesem Vorgehen die intermediäre Bildung einer hochviskosen, kaum rührbaren Masse und damit Agglomeration zu größeren, schwer aufschließbaren Feststoffpartikeln vermieden werden, sodass die Trocknung in einem einfachen Rührwerk oder Schaufeltrockner rasch und schonend möglich ist. Das Verfahren ist sehr energieeffizient und umweltfreundlich, weil kein azeotropes Lösungsmittel benötigt wird und nur die minimal erforderliche Wassermenge verdampft werden muss. Die Destillate enthalten nur Alkohol und Wasser und ermöglichen damit ein einfaches Wertstoffrecycling.

Vorzugsweise werden im Verfahren Salze von Organosilanolen hergestellt, wobei im ersten Schritt Organoalkoxysilane der allgemeinen Formel 1

(R¹)ₐSi(OR⁴)_{b}(-Si(R²)_{3-c}(OR⁴)_{c})_{d} (1)

oder deren Hydrolyse/Kondensationsprodukte, oder die Organosilane der allgemeinen Formel 1 zusammen mit deren Hydrolyse/Kondensationsprodukten eingesetzt werden,
wobei
- **R¹, R²**: einen einwertigen Si-C gebundenen unsubstituierten oder durch Halogenatome, Aminogruppen, C₁₋₆-Alkyl oder C₁₋₆-Alkoxy- oder Silylgruppen substituierten Kohlenwasserstoffrest mit 1 bis 30 Kohlenstoffatomen, in dem eine oder mehrere, einander nicht benachbarte -CH₂-Einheiten durch Gruppen -O-, -S-, oder -NR³- ersetzt sein können und in denen eine oder mehrere, einander nicht benachbarte =CH-Einheiten durch Gruppen -N= ersetzt sein können,
- **R³**: Wasserstoff, einen einwertigen unsubstituierten oder durch Halogenatome oder NH₂-Gruppen substituierten Kohlenwasserstoffrest mit 1 bis 8 Kohlenstoffatomen,
- **R⁴**: Methoxy-, Ethoxy-, 1-Propoxy- oder 2-Propoxygruppe,
- **a**: die Werte 1, 2 oder 3 und
- **b, c, d**: die Werte 0, 1, 2 oder 3 bedeuten, 1
mit der Maßgabe, dass b+c ≥ 1 und a+b+d = 4.

Es können auch gemischte Oligomere aus Verbindungen der allgemeinen Formel 1 eingesetzt werden, oder Gemische dieser gemischten oligomeren Siloxane mit monomeren Silanen der allgemeinen Formel 1. Gegebenenfalls vorhandene, durch Hydrolyse gebildete Silanolgruppen in den Verbindungen der allgemeinen Formel 1 oder deren Oligomeren stören dabei nicht.

R¹, R² können linear, verzweigt, zyklisch, aromatisch, gesättigt oder ungesättigt sein. Beispiele für Aminogruppen in R¹, R² sind Reste -NR⁵R⁶, wobei R⁵ und R⁶ Wasserstoff, ein Rest C₁-C₈-Alkyl, Cycloalkyl-, Aryl, Arylalkyl, Alkylaryl sein können, welche substituiert sein können durch -OR⁷, wobei R⁷ C₁-C₈-Alkyl, Aryl, Arylalkyl, Alkylaryl sein kann. Falls R⁵, R⁶ Alkylreste sind, können darin einander nicht benachbarte CH₂-Einheiten durch Gruppen -O-, -S-, oder -NR³- ersetzt sein. R⁵ und R⁶ können auch einen Cyclus darstellen. R⁵ ist bevorzugt Wasserstoff oder ein Alkylrest mit 1 bis 6 Kohlenstoffatomen.

R¹, R² in der allgemeinen Formel 1 steht bevorzugt für einen einwertigen unsubstituierten oder durch Halogenatome, Amino-, Alkoxy- oder Silylgruppen substituierten Kohlenwasserstoffrest mit 1 bis 18 Kohlenstoffatomen. Besonders bevorzugt sind unsubstituierte Alkylreste, Cycloalkylreste, Alkylarylreste, Arylalkylreste und Phenylreste. Vorzugsweise weisen die Kohlenwasserstoffreste **R¹**, R² 1 bis 6 Kohlenstoffatome auf, Besonders bevorzugt sind der Methyl-, Ethyl-, Propyl-, 3,3,3-Trifluorpropyl-, Vinyl- und der Phenylrest, ganz besonders der Methylrest.

Weitere Beispiele für Reste **R¹**, **R²** sind:
n-Propyl-, 2-Propyl-, 3-Chlorpropyl-, 2-(Trimethylsilyl)ethyl-, 2-(Trimethoxysilyl)-ethyl-, 2-(Triethoxysilyl)-ethyl-, 2-(Dimethoxymethylsilyl)-ethyl-, 2-(Diethoxymethylsilyl)-ethyl-, n-Butyl-, 2-Butyl-, 2-Methylpropyl-, t-Butyl-, n-Pentyl-, Cyclopentyl-, n-Hexyl-, Cyclohexyl-, n-Heptyl-, n-Octyl-, 2-Ethylhexyl-, n-Nonyl-, n-Decyl-, n-Undecyl-, 10-Undecenyl-, n-Dodecyl-, Isotridecyl-, n-Tetradecyl-, n-Hexadecyl-, Vinyl-, Allyl-, Benzyl-, p-Chlorphenyl-, o-(Phenyl)phenyl-, m-(Phenyl)phenyl-, p-(Phenyl)phenyl-, 1-Naphthyl-, 2-Naphthyl-, 2-Phenylethyl-, 1-Phenylethyl-, 3-Phenylpropyl-, 3-(2-Aminoethyl)aminopropyl-, 3-Aminopropyl-, N-Morpholinomethyl-, N-Pyrrolidinomethyl-, 3-(N-Cyclohexyl)aminopropyl-, 1-N-Imidazolidinopropylrest.
Weitere Beispiele für **R¹, R²** sind Reste -(CH₂O)ₙ-R⁸, -(CH₂CH₂O)ₘ-R⁹, und -(CH₂CH₂NH)ₒH, wobei **n, m** und o Werte von 1 bis 10, insbesondere 1, 2, 3 bedeuten und **R⁸, R⁹** die Bedeutungen von **R⁵, R⁶** aufweisen.

**R³** bedeutet vorzugsweise Wasserstoff oder einen unsubstituierten oder durch Halogenatome substituierten Alkylrest mit 1 bis 6 Kohlenstoffatomen. Beispiele für **R³** sind vorstehend für **R¹** aufgeführt.

Vorzugsweise bedeutet **d** den Wert 0. Vorzugsweise bedeutet höchstens bei 20 Mol-%, insbesondere bei höchstens 5 Mol-% der Verbindungen der allgemeinen Formel 1 d einen Wert 1, 2 oder 3. Beispiele für Verbindungen der allgemeinen Formel 1, bei der a = 1 bedeutet, sind:
MeSi(OMe)₃, MeSi(OEt)₃, MeSi(OMe)₂(OEt), MeSi (OMe) (OEt)₂, MeSi(OCH₂CH₂OCH₃)₃, H₃C-CH₂-CH₂-Si(OMe)₃, (H₃C)₂CH-Si(OMe)₃, CH₃CH₂CH₂CH₂-Si(OMe)₃, (H₃C)₂CHCH₂-Si(OMe)₃, tBu-Si(OMe)₃, PhSi(OMe)₃, PhSi(OEt)₃, F₃C-CH₂-CH₂-Si(OMe)₃, H₂C=CH-Si(OMe)₃, H₂C=CH-Si(OEt)₃, H₂C=CH-CH₂-Si(OMe)₃, Cl-CH₂CH₂CH₂-Si(OMe)₃, n-Hexyl-Si(OMe)₃, cy-Hex-Si(OEt)₃, cy-Hex-CH₂-CH₂-Si(OMe)₃, H₂C=CH-(CH₂)₉-Si(OMe)₃, CH₃CH₂CH₂CH₂CH(CH₂CH₃)-CH₂-Si(OMe)₃, Hexadecyl-Si(OMe)₃.
Cl-CH₂-Si(OMe)₃, H₂N-(CH₂)₃-Si(OEt)₃, cyHex-NH-(CH₂)₃-Si(OMe)₃, H₂N-(CH₂)₂-NH-(CH₂)₃-Si(OMe)₃, O(CH₂CH₂)₂N-CH₂-Si(OEt)₃, PhNH-CH₂-Si(OMe)₃, Hexadecyl-SiH₃, (MeO)₃Si-CH₂CH₂-Si(OMe)₃, (EtO)₃SiCH₂CH₂-Si(OEt)₃, (MeO)₃SiSi(OMe)₂Me, MeSi(OEt)₂Si(OEt)₃.

Bevorzugt sind MeSi(OMe)₃, MeSi(OEt)₃, (H₃C)₂CHCH₂-Si(OMe)₃ und PhSi(OMe)₃, wobei Methyltrimethoxysilan bzw. dessen Hydrolyse/Kondensationsprodukt besonders bevorzugt sind.

Beispiele für Verbindungen der allgemeinen Formel 1, bei der a = 2 bedeutet, sind:
Me₂Si(OMe)₂, Me₂Si(OEt)₂, Me₂Si(OCH(CH₃)₂)₂, MeSi(OMe)₂CH₂CH₂CH₃, Et₂Si(OMe)₂, Me₂Si(OCH₂CH₂OCH₃)₂, MeSi(OMe)₂Et, (H₃C)₂CH-Si(OMe)₂Me, Ph-Si(OMe)₂Me, t-Bu-Si(OMe)₂Me, Ph₂Si(OMe)₂, PhMeSi(OEt)₂, MeEtSi(OMe)₂,
F₃C-CH₂-CH₂-Si(OMe)₂Me, H₂C=CH-Si(OMe)₂Me, H₂C=CH-CH₂-Si(OMe)₂Me, Cl-CH₂CH₂CH₂-Si(OMe)₂Me, cy-Hex-Si(OMe)₂Me,
cy-Hex-CH₂-CH₂-Si(OMe)₂Me, H₂C=CH-(CH₂)₉-Si(OMe)₂Me, Cl-CH₂-SiMe(OMe)₂, H₂N-(CH₂)₃-SiMe(OEt)₂, cyHex-NH-(CH₂)₃-SiMe(OMe)₂, H₂N-(CH₂)₂-NH-(CH₂)₃-SiMe(OMe)₂, O(CH₂CH₂)₂N-CH₂-SiMe(OMe)₂, PhNH-CH₂-SiMe(OMe)₂,(MeO)₂MeSi-CH₂CH₂-SiMe(OMe)₂, (EtO)₂MeSi-CH₂CH₂-SiMe(OEt)₂, (MeO)₂MeSiSi(OMe)₂Me, MeSi(OEt)₂SiMe(OEt)₂, MeCl₂SiSiMeCl₂, Me₂Si (OMe) Si (OMe)₃, Me₂Si(OMe) Si (OMe)Me₂, Me₂Si(OMe)SiMe₃, Me₂Si(OMe)SiMe(OMe)₂.

Bevorzugt sind Me₂Si(OMe)₂, Me₂Si(OEt)₂, MeSi(OMe)₂CH₂CH₂CH₃ und Ph-Si(OMe)₂Me, wobei Me₂Si(OMe)₂ und MeSi(OMe)₂CH₂CH₂CH₃ besonders bevorzugt sind.

Me bedeutet Methylrest, Et bedeutet Ethylrest, Ph bedeutet Phenylrest, t-Bu bedeutet 2,2-Dimethylpropylrest, cy-Hex bedeutet Cyclohexylrest, Hexadecyl- bedeutet n-Hexadecylrest.

Vorzugsweise bedeuten a = 1 oder 2.

Insbesondere sind mindestens 50 %, vorzugsweise mindestens 60%, besonders bevorzugt mindestens 70% und höchstens 100%, vorzugsweise höchstens 90%, besonders bevorzugt höchstens 80% aller Reste **R¹** in den Verbindungen der allgemeinen Formel 1 oder deren Hydrolyse/Kondensationsprodukte Methylreste, Ethylreste oder Propylreste.

Das eingesetzte Alkalihydroxid wird vorzugsweise ausgewählt aus Lithium-, Natrium- und Kaliumhydroxid.

Die im ersten Schritt eingesetzte Menge an Alkalihydroxid wird vorzugsweise so gewählt, dass das Molverhältnis Kation zu Silicium mindestens 0,2, vorzugsweise mindestens 0,4, besonders bevorzugt mindestens 0,5, insbesondere bevorzugt mindestens 0,6 und höchstens 3,0 vorzugsweise höchstens 1,0 besonders bevorzugt höchstens 0,8, insbesondere bevorzugt höchstens 0,7 beträgt.

Das im ersten Schritt gebildete Hydrolysat kann vorliegen als Lösung und/oder als Suspension, bei der Silanolat-Salz ungelöst vorliegt. Das im ersten Schritt gebildete Hydrolysat kann auch durch Einengen bis zu einer Suspension aufkonzentriert werden, bevor es in Schritt 2 eingesetzt wird. Es können auch Gemische alkoholisch-wässriger Mischungen verschiedener Silanolat-Salze im zweiten Schritt eingesetzt werden, wobei ein oder mehrere Alkohole anwesend sein können.

Schritt 2 hat zum Ziel, die flüchtigen Bestandteile - hauptsächlich Alkohol und das vorhandene bzw. beim Trocknungsprozess gegebenenfalls durch Kondensationsprozesse gebildete Wasser - aus der Mischung so rasch zu entfernen, dass keine klebrigen, zähen Intermediate auftreten. Die Trocknungsbedingungen am Festbett werden deshalb vorzugsweise so gewählt, dass die flüchtigen Bestandteile mit dem höchsten Siedepunkt möglichst sofort bei Kontakt mit dem Festbett verdampfen. Um dies zu gewährleisten, werden Temperatur und gegebenenfalls Druck bei der Trocknung entsprechend eingestellt.

Falls im ersten Schritt Organoalkoxysilane der allgemeinen Formel 1 eingesetzt werden, wird die Festbett- bzw. Wandtemperatur, d.h. die höchste Temperatur mit der die zu trocknende Mischung in Kontakt kommt, vorzugsweise so gewählt, dass thermische Zersetzung der Reaktionsmischung innerhalb des gesamten Trocknungszeitraums während Schritt 2 weitgehend vermieden wird. Üblicherweise wird dazu mittels DSC-Messungen an der Hydrolysat-Mischung die Zeit bis zur maximalen Geschwindigkeit der thermischen Zersetzung unter adiabatischen Bedingungen (= Time to Maximum Rate = TMR_{ad}) bei verschiedenen Temperaturen bestimmt und diejenige maximale Temperatur gewählt, bei der man, gegebenenfalls unter Wahrung eines Sicherheitsabstandes, innerhalb des Zeitraums der thermischen Belastung während der Trocknung keine unkontrollierte exotherme Zersetzung befürchten muss. Die Festbett- bzw. Wandtemperatur wird vorzugsweise so gewählt, dass die TMR_{ad} mindestens 200%, vorzugsweise mindestens 150%, besonders bevorzugt mindestens 100% der Trocknungszeit beträgt. Zur Erzielung einer hohen Raum-Zeit-Ausbeute ist deshalb eine möglichst hohe Temperatur in Schritt 2 anzustreben. Vorzugsweise beträgt die Festbett- bzw. Wandtemperatur in Schritt 2 mindestens 70°C, besonders bevorzugt mindestens 90°C, insbesondere mindestens 100°C und vorzugsweise höchstens 200°C, besonders bevorzugt höchstens 160°C, insbesondere höchstens 140°C, sofern keine störende thermische Zersetzung bei diesen Temperaturen auftritt. Die Temperatur kann während des Schrittes 2 konstant bleiben oder einen ansteigenden oder absteigenden Gradienten durchlaufen, wobei eine konstante Fahrweise bevorzugt ist. Zur Vermeidung thermischer Zersetzung ist es vorteilhaft, den Druck während der Trocknung in Schritt 2 gegenüber dem Druck der umgebenden Atmosphäre zu verringern. Vorzugsweise wird ein Druck von höchstens 800 hPa, besonders bevorzugt höchstens 200 hPa insbesondere höchstens 20 hPa, vorzugsweise mindestens 0,01 hPa, besonders bevorzugt mindestens 1 hPa, insbesondere mindestens 5 hPa eingestellt. Um eine möglichst hohe Raum/Zeitausbeute zu realisieren, wird vorzugsweise sowohl die maximale Festbett-Temperatur gewählt, bei der während der Trocknungsdauer keine wesentliche thermische Zersetzung zu erwarten ist, als auch der Druck während des Trocknungsprozesses auf das technisch und wirtschaftlich machbare Minimum eingestellt. Die Dosiergeschwindigkeit des Hydroylsats aus Schritt 1 auf das Festbett wird dabei vorzugsweise so gewählt, dass die Bildung von Agglomeraten weitgehend vermieden werden kann. Möglich, aber nicht bevorzugt ist auch ein zwei- oder mehrstufiger Prozess, bei dem zunächst aus der Hydrolysat-Lösung aus Schritt 1 und Festbett eine Suspension hergestellt wird, die dann in einem nachgeschalteten Schritt getrocknet wird.

Vorzugsweise wird bis zu einem Restfeuchtegehalt bei einer Messung bei 120°C im Feststoff (F) von maximal 3 Gew.-% besonders bevorzugt maximal 1 Gew.-%, insbesondere maximal 0,5 Gew.-% bezogen auf die Einwaage getrocknet. Vorzugsweise wird die Trocknung unter Sauerstoffausschluss insbesondere unter einer Inertgasatmosphäre, z.B. aus Stickstoff, Argon, Helium, durchgeführt.

Das Festbett kann zur Beschleunigung des Trocknungsprozesses mit Hilfe eines Gases, z.B. Inertgas wie Stickstoff oder Dampfes, z.B. Wasserdampf - im Extremfall bis zur Ausbildung einer Wirbelschicht - fluidisiert werden.

Das Verfahren kann im Batchbetrieb z.B. unter Verwendung eines Rührkessels oder Schaufeltrockners mit Destillationsaufsatz, wie er in Vielzweckanlagen üblich ist, durchgeführt werden.
Dabei wird das Festbett bei den gewünschten Trocknungsbedingungen - vorzugsweise auf eine Temperatur oberhalb Raumtemperatur temperiert und bei vermindertem Druck - vorgelegt und die Hydrolysat-Lösung aus Schritt 1 auf das Festbett dosiert. Die Dosierung kann über einfaches Eintropfen oder Versprühen z.B. mit Hilfe von Düsen gegebenenfalls unter paralleler Einspeisung von Inertgas erfolgen. Um eine möglichst homogene Verteilung und ständige Erneuerung der Oberfläche des Festbettes zu erreichen, wird das Festbett vorzugsweise durch ständiges Rühren während des Trocknungsvorgangs in Bewegung gehalten. Nach Trocknung der gewünschten Menge - beispielsweise wenn der maximale Füllstand der Apparatur erreicht ist - wird Feststoff (F), insbesondere als Granulat oder Pulver beispielsweise durch Ausblasen über ein Tauchrohr oder Ablassen über das Bodenventil entnommen.

Im Gegensatz zu einer direkten Beheizung, z.B. mittels elektrischer Widerstandsheizung, Induktionsheizung, Mikrowellenheizung, Befeuerung/Heißgasheizung, ist es im Fall einer indirekten Wärmeübertragung durch Wärmeträger, z.B. Wasserdampf, Wasser, Wärmeträgeröl, verfahrenstechnisch und aus Zeitgründen günstig, wenn Schritt 2 bei konstanter Temperatur abläuft.

Aufgrund der geringen Belagbildung ist es bei Kampagnen üblicherweise nicht notwendig, den Reaktor zwischen den einzelnen Ansätzen von Feststoffresten zu reinigen. Sollte dennoch eine Reinigung z.B. am Ende der Kampagne erforderlich sein, so ist dies durch einfaches Ausspülen oder gegebenenfalls Fluten der Anlage mit Wasser kostengünstig und ohne schädliche Emissionen leicht möglich. Ein kontinuierliches Verfahren in einem Rohrreaktor oder einem Misch/Förderaggregat wie einem Kneter oder einem Einschnecken- oder Doppelschneckenextruder oder einem liegenden Schaufeltrockner ist ebenfalls möglich und für die großtechnische Produktion vorteilhaft. Wird die Trocknung dabei unter vermindertem Druck durchgeführt, erfolgen Nachchargierung von Festbettmaterial sowie der Austrag zur Abfüllung oder in Lagerbehälter vorzugsweise über eine Druckschleuse. Vorzugsweise wird dabei das Produkt vor oder im Bereich der Austragszone auf Umgebungstemperatur oder leicht darüber abgekühlt. Vorzugsweise wird ein Kontiverfahren so durchgeführt, dass der gewünschte Endtrocknungsgrad innerhalb eines einzigen Prozessschrittes erreicht wird. Darüber hinaus können auch mehrstufige Trocknungsverfahren mit mehreren hintereinandergeschalteten Konti- oder Semibatch-Prozessschritten durchgeführt werden. Beispielsweise kann ein im ersten Schritt mittels Festbett teilgetrocknetes Siliconat zunächst granuliert und danach in einem Tellertrockner bis zum gewünschten Trocknungsgrad zum Feststoff (F) getrocknet werden. Eine konstante Produktqualität und -Zusammensetzung lässt sich beispielsweise durch Nachchargierung von Festbett durch Rückführung eines Teilstroms des Feststoffs (F) nach der Trocknung oder einer Vorstufe davon realisieren.

Zusätzlich können weitere Additive wie z.B. Rieselhilfen, Antibackmittel vor, während oder nach dem erfindungsgemäßen Prozess zugesetzt werden. Dies geschieht beispielsweise durch Zudosierung zum Festbett im zweiten Schritt.

Falls gewünscht, können die nach dem erfindungsgemäßen Verfahren erhaltenen Feststoffe (F) zerkleinert oder zu gröberen Partikeln oder Formkörpern verdichtet, z.B. Granulat, Pellets, Briketts, und danach gesichtet bzw. klassiert werden. Die Anteile, die als Unterkorn oder Überkorn aussortiert werden, können so z.B. als Festbettmaterial zurückgeschleust werden. Vorzugsweise werden die Feststoffe (F) in Form von Pulver oder Granulat hergestellt.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 1000 hPa (abs.) durchgeführt.

### Beispiel 1: erfindungsgemäßes Verfahren zur Trocknung eines Kaliummethylsiliconats (K : Si = 0,65 : 1)

In Schritt 1 wird ein Hydrolysat H1 analog Beispiel 1 in DE 4336600 aus einem Moläquivalent Methyltrimethoxysilan (hergestellt aus 1 Moläquivalent Methyltrichlorsilan und 2 * 1,5 Moläquivalenten Methanol), 0,65 Moläquivalenten Kaliumhydroxid und 3,5 Mol-Äquivalenten Wasser (in Form einer 37%igen Kalilauge) hergestellt.

Festgehalt = 39 Gew.-% (bestimmt mit der Festgehaltswaage HR73 Halogen Moisture Analyzer von Mettler Toledo bei 160°C, enthält laut NMR 46,5 Gew.-% Methanol und 14,5 Gew.-% Wasser).
Zur Bestimmung des Verlaufs der thermischen Stabilität während des Trocknungsprozesses wird eine Probe dieser Mischung bei 120°C zunächst unter Normaldruck, dann unter Drucksenkung auf 5 hPa sukzessive entflüchtigt. In verschiedenen Stadien des Prozesses werden Proben für DSC-Messungen entnommen. Demnach weist der feuchte aber bereits feste Destillationsrückstand die niedrigste Onset-Temperatur (ca. 174°C) und die höchste Zersetzungsenergie (ca. 806 kJ/kg) auf.
Zur Bestimmung der Time to Maximum Rate (TMR_{ad}) der thermischen Zersetzung unter adiabatischen Bedingungen werden DSC-Messungen dieses Rückstands mit verschiedenen Heizraten in druckfesten Edelstahltiegeln unter Stickstoff im Temperaturbereich zwischen Raumtemperatur und 400°C durchgeführt. Die Auswertung erfolgt über eine sogenannte "Isoconversion"-Methode mit umsatzabhängiger Aktivierungsenergie gemäß S. Vyzovkin, C.A. Wright, Model-free and model-fitting approaches to kinetic analysis of isothermal and nonisothermal Data, Thermochim. Acta, 1999, 340-341, 53-68. Die Auswertung wird mit dem Programm AKTS, Thermal Kinetics, Version 3.24 gemäß B. Roduit, Ch. Borgeat, B. Berger, P. Folly, B. Alonso, J.N. Aebischer, F. Stoessel, Advanced Kinetic Tools for the Evaluation of Decomposition Reactions, J. Thermal Anal. and Calor. 2005, 80, 229-236 durchgeführt. Mit der umsatzabhängigen Aktivierungsenergie wird für verschiedene Temperaturen die TMR_{ad} berechnet.
Demnach ergibt sich bei 118°C eine TMR_{ad} von > 24h, bei 120°C von > 20h und bei 130°C von > 8h.
Auf Basis dieser Daten wird für das Trocknungsverfahren eine Wand- und Festbetttemperatur von maximal 120°C festgelegt.

### Trocknung einer Kaliummethylsiliconat-Lösung

In einem mit Stickstoff inertisierten 500-ml-5-Hals-Glaskolben mit Tropftrichter, Flügelrührer, Thermometer und Destillationsbrücke werden 50 g des für die oben genannten DSC-Messungen getrockneten Siliconat-Pulvers vorgelegt und unter Rühren im Ölbad auf 120°C aufgeheizt, dabei wird der Druck mittels Vakuumpumpe auf 5 hPa reduziert. Anschließend werden 113 g des Hydrolysats H1 aus dem Tropftrichter binnen einer Stunde zudosiert. Beim Eintropfen auf das heiße Festbett verdampfen die flüchtigen Bestandteile schlagartig, was zu starker Staubbildung im Kolben führt. In der Vorlage sammeln sich dabei 69,3 g klares farbloses Destillat. Die Auswaage der Feststoffmenge ergibt ca. 90 g. Somit werden 91% des in der Siliconat-Lösung H1 enthaltenen Feststoffanteils in ein trockenes Pulver umgewandelt. Sein Feststoffgehalt liegt bei 99,8% (bestimmt mit der Festgehaltswaage HR73 Halogen Moisture Analyzer von Mettler Toledo bei 160°C) es löst sich 50%ig in Wasser.

### Beispiel 2 erfindungsgemäßes Verfahren zur Trocknung eines Kaliummethylsiliconats (K : Si = 0,65 : 1) in Gegenwart einer Kieselsäure

In einem mit Stickstoff inertisierten 500-ml-5-Hals-Glaskolben mit Tropftrichter, Flügelrührer, Thermometer und Destillationsbrücke werden 25 g des für die oben genannten DSC-Messungen getrockneten Siliconat-Pulvers und 2,5 g einer aus dem Filter einer Rückstandsverbrennungsanlage isolierten Kieselsäure vorgelegt und unter Rühren im Ölbad auf 120°C aufgeheizt, dabei wird der Druck mittels Vakuumpumpe auf 5 hPa reduziert. Anschließend werden 56 g des Hydrolysats H1 aus dem Tropftrichter binnen 25 Minuten zudosiert. Beim Eintropfen auf das heiße Festbett verdampfen die flüchtigen Bestandteile schlagartig, was zu starker Staubbildung im Kolben führt. In der Vorlage sammeln sich dabei 34 g klares farbloses Destillat. 10 Minuten nach Beendigung der Dosierung liegt der Festgehalt einer entnommenen Pulverprobe bei 98,4% (bestimmt mit der Festgehaltswaage HR73 Halogen Moisture Analyzer von Mettler Toledo bei 160°C). Nach weiteren 10 Minuten liegt der Festgehalt einer entnommenen Pulverprobe bei 99,5%. Die Auswaage der Feststoffmenge ergibt ca. 46 g. Somit werden 85% des in der Siliconat-Lösung H1 enthaltenen Feststoffanteils in ein trockenes Pulver umgewandelt. Es löst sich 50%ig in Wasser.

### Beispiele 3-6 erfindungsgemäßes Verfahren zur Trocknung eines Kaliummethylsiliconats (K : Si = 0,65 : 1) in Gegenwart verschiedener Festbettmaterialien

Der Trocknungsschritt in Beispiel 1 wird jeweils wiederholt, jedoch anstelle des getrockneten Siliconat-Pulvers als Festbett jeweils der gleiche Anteil Alabastergips (3), Kieselgur (Celite 545) (4), Aluminiumoxid (5) und Tylose (Methylcellulose) (6) vorgelegt. In allen Fällen erhält man rieselfähige Feststoffe, die in kommerziell erhältliche Gipsputze (KNAUF Maschinenputz MP75, Wasser/Gips-Faktor 0,60, KNAUF Goldband Wasser/Gips-Faktor 0,67) zu jeweils 0,4 Gew.-% eingemischt wurden. Die nach DIN EN 520 bestimmte Wasseraufnahme von damit hergestellten Gipsprobekörpern lag jeweils deutlich unter 3 Gew.-%. Die Wirksamkeit lag somit im Bereich des Feststoffes aus Beispiel 1, sie wurde also durch die inerten Anteile des Festbetts nicht beeinträchtigt.

## Patentansprüche

1. Verfahren zur Herstellung von Feststoffen (F) aus Salzen von Silanolen, von deren Hydrolyse/Kondensationsprodukten, oder von Silanolen zusammen mit deren Hydrolyse/Kondensationsprodukten und Kationen, die ausgewählt werden aus Alkaliionen, bei denen das Molverhältnis von Kation zu Silicium 0,1 bis 3 beträgt, bei dem in einem ersten Schritt Alkoxysilane, deren Hydrolyse/Kondensationsprodukte, oder Alkoxysilane zusammen mit deren Hydrolyse/Kondensationsprodukten, wobei die Alkoxygruppe ausgewählt wird aus Methoxy-, Ethoxy-, 1-Propoxy- und 2-Propoxygruppe, mit Alkalihydroxid und Wasser hydrolysiert werden,
und in einem zweiten Schritt aus dem im ersten Schritt hergestellten Hydrolysat das im Hydrolysat vorhandene Wasser und der vorhandene Alkohol an einem Festbett verdampft werden und Feststoffe (F) erhalten werden.

2. Verfahren nach Anspruch 1, bei dem das Festbett vorzugsweise aus einem pulverförmigen oder granulierten Material besteht.

3. Verfahren nach Anspruch 1 oder 2, bei dem das Festbett ausgewählt wird aus Baustoffen, anwendungsfertigen Baustoffmischungen, Zuschlagstoffen für anwendungsfertige Baustoffmischungen, inerten Feststoffen und getrocknetem Siliconat.

4. Verfahren nach Anspruch 1 bis 3, bei dem als Festbett Feststoff (F) eingesetzt wird.

5. Verfahren nach Anspruch 1 bis 4, bei dem die Korngröße des eingesetzten Festbetts 1 µm bis 1 mm beträgt.

6. Verfahren nach Anspruch 1 bis 5, bei dem im ersten Schritt Organoalkoxysilane der allgemeinen Formel 1
(R¹)ₐSi(OR⁴)_{b}(-Si(R²)_{3-c}(OR⁴)_{c})_{d} (1)
oder deren Hydrolyse/Kondensationsprodukte, oder die Organosilane der allgemeinen Formel 1 zusammen mit deren Hydrolyse/Kondensationsprodukten eingesetzt werden,
wobei
**R¹, R²** einen einwertigen Si-C gebundenen unsubstituierten oder durch Halogenatome, Aminogruppen, C₁₋₆-Alkyl oder C₁₋₆-Alkoxy- oder Silylgruppen substituierten Kohlenwasserstoffrest mit 1 bis 30 Kohlenstoffatomen, in dem eine oder mehrere, einander nicht benachbarte -CH₂-Einheiten durch Gruppen -O-, -S-, oder -NR³- ersetzt sein können und in denen eine oder mehrere, einander nicht benachbarte =CH-Einheiten durch Gruppen -N= ersetzt sein können,
**R³** Wasserstoff, einen einwertigen unsubstituierten oder durch Halogenatome oder NH₂-Gruppen substituierten Kohlenwasserstoffrest mit 1 bis 8 Kohlenstoffatomen,
**R⁴** Methoxy-, Ethoxy-, 1-Propoxy- oder 2-Propoxygruppe,
**a** die Werte 1, 2 oder 3 und
**b, c, d** die Werte 0, 1, 2 oder 3 bedeuten,
mit der Maßgabe, dass b+c ≥ 1 und a+b+d = 4.

7. Verfahren nach Anspruch 6, bei dem **R¹** und **R²** Kohlenwasserstoffreste mit 1 bis 6 Kohlenstoffatomen sind.

8. Verfahren nach Anspruch 6 bis 7, bei dem bei höchstens 20 Mol-% der Verbindungen der allgemeinen Formel 1 d einen Wert 1, 2 oder 3 bedeutet.

9. Verfahren nach Anspruch 1 bis 8, bei dem die Festbetttemperatur im zweiten Schritt 70°C bis 200°C beträgt.

10. Verfahren nach Anspruch 1 bis 9, bei dem der Druck im zweiten Schritt 1 hPa bis 200 hPa beträgt.

## Claims

1. Process for producing solids (S) from salts of silanols, of their hydrolysis/condensation products, or of silanols together with their hydrolysis/condensation products and cations selected from alkali metal ions in which the molar ratio of cation to silicon is from 0.1 to 3, wherein in a first step alkoxysilanes, their hydrolysis/condensation products, or alkoxysilanes together with their hydrolysis/condensation products, wherein the alkoxy group is selected from methoxy, ethoxy, 1-propoxy and 2-propoxy group, are hydrolyzed with alkali metal hydroxide and water,
and in a second step the water present in the hydrolyzate and the alcohol present are evaporated out of the hydrolyzate prepared in the first step in a fixed bed, and solids (S) are obtained.

2. Process according to Claim 1, wherein the fixed bed preferably consists of a pulverulent or granulated material.

3. Process according to Claim 1 or 2, wherein the fixed bed is selected from construction materials, ready-to-use construction material mixtures, admixtures for ready-to-use construction material mixtures, inert solids and dried siliconate.

4. Process according to Claim 1 to 3, wherein solids (S) are used as the fixed bed.

5. Process according to Claim 1 to 4, wherein the particle size of the fixed bed used is 1 µm to 1 mm.

6. Process according to Claim 1 to 5, wherein there are used in the first step organoalkoxysilanes of the general formula 1
(R¹)ₐSi(OR⁴)_{b}(-Si(R²)_{3-c}(OR⁴)_{c})_{d} (1)
or their hydrolysis/condensation products, or the organosilanes of the general formula 1 together with their hydrolysis/condensation products,
wherein
**R¹, R²** represent a monovalent Si-C-bonded hydrocarbon radical having from 1 to 30 carbon atoms which is unsubstituted or substituted by halogen atoms, amino groups, C₁₋₆-alkyl or C₁₋₆-alkoxy or silyl groups and in which one or more non-adjacent -CH₂-units can be replaced by groups -O-, -S-, or -NR³-and in which one or more non-adjacent =CH- units can be replaced by groups -N=,
**R³** represents hydrogen, a monovalent hydrocarbon radical having from 1 to 8 carbon atoms which is unsubstituted or substituted by halogen atoms or NH₂ groups,
**R⁴** represents methoxy, ethoxy, 1-propoxy or 2-propoxy group,
**a** represents the values 1, 2 or 3, and
**b, c, d** represent the values 0, 1, 2 or 3,
with the proviso that b+c ≥ 1 and a+b+d = 4.

7. Process according to Claim 6, wherein R¹ and R² are hydrocarbon radicals having from 1 to 6 carbon atoms.

8. Process according to Claim 6 or 7, wherein d has a value of 1, 2 or 3 in not more than 20 mol% of the compounds of the general formula 1.

9. Process according to Claim 1 to 8, wherein the fixed bed temperature in the second step is 70°C to 200°C.

10. Process according to Claim 1 to 9, wherein the pressure in the second step is 1 hPa to 200 hPa.

## Revendications

1. Procédé pour la préparation de solides (F) à partir de sels de silanols, de leurs produits d'hydrolyse/condensation ou de silanols ensemble avec leurs produits d'hydrolyse/condensation et de cations qui sont choisis parmi les ions alcalins, le rapport molaire de cation à silicium valant 0,1 à 3, dans lequel, dans une première étape, on hydrolyse des alcoxysilanes, leurs produits d'hydrolyse/condensation ou des alcoxysilanes ensemble avec leurs produits d'hydrolyse/condensation, le groupe alcoxy étant choisi parmi le groupe méthoxy, éthoxy, 1-propoxy et 2-propoxy, avec de l'hydroxyde alcalin et de l'eau et, dans une deuxième étape, on évapore l'eau présente et l'alcool présent dans l'hydrolysat à partir de l'hydrolysat préparé dans la première étape sur un lit fixe et on obtient les solides (F).

2. Procédé selon la revendication 1, dans lequel le lit fixe est de préférence constitué par un matériau sous forme de poudre ou granulé.

3. Procédé selon la revendication 1 ou 2, dans lequel le lit fixe est choisi parmi des matériaux de construction, des mélanges de matériau de construction prêts à l'emploi, des additifs pour des mélanges de matériau de construction prêts à l'emploi, des solides inertes et du siliconate séché.

4. Procédé selon la revendication 1 à 3, dans lequel on utilise, comme lit fixe, le solide (F).

5. Procédé selon la revendication 1 à 4, dans lequel la granulométrie du lit fixe utilisé est de 1 µm à 1 mm.

6. Procédé selon la revendication 1 à 5, dans lequel on utilise, dans la première étape, des organoalcoxysilanes de formule générale 1
(R¹)ₐSi(OR⁴)_{b}(-Si(R²)_{3-c}(OR⁴)_{c})_{d} (1)
ou leurs produits d'hydrolyse/condensation ou les organosilanes de formule générale 1 ensemble avec leurs produits d'hydrolyse/condensation,
R¹, R² signifiant un radical hydrocarboné monovalent, lié par Si-C, non substitué ou substitué par des atomes d'halogène, des groupes amino, des groupes C₁₋₆-alkyle ou C₁₋₆-alcoxy ou silyle, comprenant 1 à 30 atomes de carbone, dans lequel une ou plusieurs unités -CH₂- non adjacentes peuvent être remplacées par des groupes -O- -S-, ou -NR³- et dans lesquels une ou plusieurs unités =CH non adjacentes peuvent être remplacées par des groupes -N=,
R³ signifie hydrogène, un radical hydrocarboné monovalent, non substitué ou substitué par des atomes d'halogène ou des groupes NH₂, comprenant 1 à 8 atomes de carbone,
R⁴ signifie un groupe méthoxy, éthoxy, 1-propoxy ou 2-propoxy,
a signifie les valeurs 1, 2 ou 3 et
b, c, d signifient les valeurs 0, 1, 2 ou 3
à condition que b + c ≥ 1 et a + b + d = 4.

7. Procédé selon la revendication 6, R¹ et R² représentant des radicaux hydrocarbonés comprenant 1 à 6 atomes de carbone.

8. Procédé selon la revendication 6 à 7, dans lequel, pour au plus 20% en mole des composés de formule générale 1, d signifie la valeur 1, 2 ou 3.

9. Procédé selon la revendication 1 à 8, dans lequel la température du lit fixe dans la deuxième étape vaut 70°C à 200°C.

10. Procédé selon la revendication 1 à 9, dans lequel la pression dans la deuxième étape vaut 1 hPa à 200 hPa.
